# EUROPÄISCHE PATENTANMELDUNG

(11) **EP 0 943 857 A2**
(43) Veröffentlichungstag der Anmeldung: **22.09.1999**
(21) Anmeldenummer: 99102815.0
(22) Anmeldetag: 26.02.1999
(51) Int. Cl.: F16L 55/165

(54) **Verfahren zum segmentweisen Lösen von im Boden verlegten gemufften Rohrleitungen und Vorrichtung zur Durchführung des Verfahrens**

(30) Priorität: 16.03.1998 DE 19811137
(71) Anmelder: Thyssen Schachtbau Rohrtechnik GmbH, 45356 Essen (DE)
(72) Erfinder: Imort, Klaus Robert, 45529 Hattingen (DE)
(74) Vertreter: Thiel, Christian

(57) **Zusammenfassung**

Die Erfindung betrifft ein Verfahren zum segmentweisen Lösen von im Boden verlegten gemufften Rohrleitungen, bei dem die Rohrleitung (16) ausgehend von zwei räumlich voneinander getrennten Baugruben geöffnet wird, in die geöffnete Rohrleitung (16) eine Fixiervorrichtung (2) eingebracht wird, die über ein erstes Zugseil (4) mit einer Hauptwinde in der ersten Baugrube verbunden wird und über ein zweites Steuerseil (5) mit einer Hilfswinde in der zweiten Baugrube, die Fixiervorrichtung (2) im Bereich einer Muffenverbindung (17) fixiert wird und die Rohrleitung (16) Segment für Segment durch Betätigung der Hauptwinde gelöst wird, wobei die Fixiervorrichtung (2) durch Betätigung der Hilfswinde von Muffenverbindung (17) zu Muffenverbindung (17) bewegt wird, sowie eine Vorrichtung zur Durchführung dieses Verfahrens.

## Beschreibung

Die Erfindung betrifft ein Verfahren zum segmentweisen Lösen von im Boden verlegten gemufften Rohrleitungen und eine Vorrichtung zur Durchführung dieses Verfahrens.

Mit der Industrialisierung in der zweiten Hälfte des vorigen Jahrhunderts und der damit verbundenen Bevölkerungszunahme wurde damit begonnen, zunächst die Bevölkerungszentren der Industrieländer mit einem System von Rohrleitungen zur Ver- und Entsorgung zu versehen. Für die Gas- und Wasserversorgung wurden dabei hauptsächlich gußeiserne Leitungen verwandt, überwiegend Grauguß, ein ausgesprochen dauerhaftes Material, das die Wasserqualität nicht beeinträchtigt und in Abwesenheit von Sauerstoff wenig korrodiert. Viele der in den achtziger Jahren des vorigen Jahrhunderts verlegten Leitungen sind entsprechend noch heute in Betrieb, weisen aber inzwischen doch erhebliche innere und äußere Korrosionsschäden auf, so daß es zunehmend zu Undichtigkeiten und dadurch bedingt zu Verlusten kommt. Hinzu kommt, daß die Kapazität nicht immer mit dem heutigen Bedarf Schritt hält. Bei Gasleitungen kommen Dichtungsprobleme hinzu, die durch die Umstellung auf das im Vergleich zum Stadtgas weniger Wasser enthaltende Edelgas bedingt sind.

Entsprechendes gilt für Abwasserleitungen, soweit sie aus Gußeisen hergestellt sind, was bei kleineren Querschnitten häufig der Fall ist, und für die Kanalisation, die, soweit Leitungen größeren Querschnitts getroffen sind, in der Regel aus Beton, Steinzeug, Asbest, Zement oder ähnlichen Materialien bestehen. Auch hier sind Leitungen älteren Datums inzwischen durch Korrosion und mechanische Belastung, wie sie durch Verkehrserschütterungen, Druckbelastungen oder Erdbewegungen im Rahmen von Tiefbaumaßnahmen oder in Bergbaugebieten auftreten, vielfach schadhaft und sanierungsbedürftig. Hinzu kommt die mechanische Beanspruchung durch die Geschiebefracht vor allem der Straßenabwässer.

Es hat sich gezeigt, daß die über Jahrzehnte aufgebauten Leitungsnetze in ihren älteren Teilen dringend sanierungsbedürftig sind, wobei sich gerade die Schäden, die durch Erschütterungen und hohe Belastung bedingt sind, in den letzten Jahren vervielfältigt haben. Es besteht deshalb ein erheblicher Sanierungsbedarf, der noch dadurch verstärkt wird, daß die Kommunen, in deren Besitz die Leitungsnetze zumeist sind, in der Vergangenheit zu wenig Geld in den Erhalt ihrer Leitungsnetze investiert haben. Der Sanierungsbedarf hat sich dadurch kumuliert.

Soweit die Sanierung von Ver- und Entsorgungsleitungen mit der Aufgrabung des Leitungsverlaufs verbunden ist, fallen erhebliche Kosten an. In der Vergangenheit wurden deshalb zahlreiche Verfahren zur grabenlosen Rohrsanierung und -verlegung entwickelt. Soweit es sich um einen Austausch vorhandener Leitungsrohre handelt - gegebenenfalls unter Einziehung neuer Rohre größeren Querschnitts zur Verbesserung der Versorgung - bereiten diese Verfahren allerdings Probleme, soweit es sich um gemuffte Rohrleitungen in verdichteten Böden handelt.

Gemuffte Rohrleitungen, d.h. Rohrleitungen, bei denen das Ende eines Rohrsegments in eine Aufweitung oder Muffe am Ende des nächsten Rohrsegments eingreift, wobei die Dichtigkeit nach außen über ein Dichtelement hergestellt wird, sind insbesondere bei hoher Bodenpressung nur schwer in grabenlosen Verfahren aus der Bettungszone zu lösen. Insbesondere die bekannt gewordenen Verfahren zum Ziehen von vorhandenen und Einziehen von neuen Rohrleitungen stoßen hier auf Schwierigkeiten. Zwar ist es ohne weiteres möglich, kurze Rohrstrecken durch sogenanntes Preßziehen auszutauschen, jedoch sind die hierbei zu erzielenden Auswechslungslängen nur relativ kurz und führen zu erhöhten Kosten durch zahlreiche Aufgrabungen in kurzen Abständen.

Es wäre deshalb wünschenswert, über ein Verfahren zu verfügen, mit dem gemuffte Altrohrleitungen aus der Bettungszone gelöst werden können, gegebenenfalls unter Verminderung der Bodenpressung in der Rohrbettungszone, so daß ohne Aufgrabungen größere Rohrlängen ausgetauscht werden können.

Die Erfindung stellt ein entsprechendes Verfahren bereit, bei dem im Boden verlegte gemuffte Rohrleitungen segmentweise gelöst werden. Dabei wird die Rohrleitung ausgehend von zwei räumlich voneinander getrennten Baugruben geöffnet, in die geöffnete Rohrleitung eine Fixiereinrichtung eingebracht, die über ein erstes Zugseil mit einer Hauptwinde in der ersten Baugrube verbunden wird und über ein zweites Steuerseil mit einer Hilfswinde in der zweiten Baugrube, die Fixiervorrichtung im Bereich einer Muffenverbindung fixiert und die Rohrleitung Segment für Segment durch Betätigung der Hauptwinde gelöst, wobei die Fixiervorrichtung durch Betätigung der Hilfswinde von Muffenverbindung zu Muffenverbindung bewegt wird.

Mit dem erfindungsgemäßen Verfahren ist es möglich, die durch die Bodenpressung bedingte Limitierung der Auswechslungslänge zu umgehen, indem ein auszutauschendes Rohr nicht insgesamt gelöst wird, sondern Segment für Segment. Es ist völlig ausreichend, daß die Rohre nur um einige Zentimeter bewegt werden und dadurch aus dem über Jahrzehnte gebildeten Verbund mit dem umgebenden Boden gelöst werden. Nach dem Lösen der Rohrsegmente können diese mit der gleichen oder einer an und für sich bekannten anderen Vorrichtung gezogen bzw. ausgetrieben werden, wobei gleichzeitig ein neues Rohr eingezogen werden kann.

Im allgemeinen wird dazu eine Fixiervorrichtung in die zu erneuernde gemuffte Rohrleitung eingebracht, diese Fixiervorrichtung mit Hilfe des Zug- und Steuerseils im Bereich einer Muffe fixiert, ein Rohrsegment, das aus einem einzigen oder mehreren zusammengesteckten Einzelrohren bestehen kann, um 3 bis 10 cm Länge aus der Muffe durch Einsatz einer Seilwinde mit entsprechender Zugkraft herausgezogen, die Fixierung der Fixiervorrichtung gelöst und mit Hilfe des Steuerseils und einer Steuerwinde im Bereich der nächsten zu lösenden Muffenverbindung positioniert und danach diese Muffenverbindung in gleicher Weise wieder gelöst.

Die Fixierung der Vorrichtung erfolgt vorzugsweise über Mitnehmer im Muffenspalt zwischen zwei Rohrsegmenten. Im allgemeinen bleibt zwischen den Einzelrohren einer gemufften Rohrleitung im Bereich der Muffe ein Spalt, der weit genug ist, Mitnehmerelemente in Form von Stiften, Scheiben oder dergleichen aufzunehmen. Diese Mitnehmerelemente übertragen dann die über das Zugseil eingebrachte Kraft ganz oder teilweise auf das zu lösende Rohr. Solche Mitnehmerelemente können beispielsweise über das Zugseil aktiviert und über das Steuerseil gelöst werden.

Eine bevorzugte Ausführungsform sieht vor, daß die Mitnehmer in Eintiefungen in der Fixiervorrichtung beweglich angeordnet sind und über Federn aufgerichtet werden, sobald sich in der Rohrleitung genügend Raum bietet. Dieser Raum steht in den Muffenspalten zur Verfügung. Bei Betätigung des Zugseils übertragen die Mitnehmer die ausgerübte Kraft auf das zu lösende Rohrsegment. Bei Betätigung des Steuerseils klappen die Mitnehmer gegen die Federwirkung wieder in die Eintiefungen zurück und erlauben die Bewegung der Fixiervorrichtung entgegengesetzt zur Richtung des Zugseils.

Alternativ ist ein hydraulisches Ausfahren der Mitnehmer möglich. Die Betätigung kann hier über eine hydraulische Hilfsleitung erfolgen, aber auch durch Auslösung der Hydraulik über das Zug- und/oder Steuerseil.

Alternativ oder zusätzlich kann die Fixiervorrichtung gegen die Rohrwandung verspreizt werden, so daß die Kraft von der Zugwinde ganz oder teilweise über Reibschluß auf das zu lösende Rohr übertragen wird.

Zur Unterstützung der Zugwinde kann es zweckmäßig sein, die Fixiervorrichtung mit einer Bodenrakete zu koppeln. Die Bodenrakete kann beispielsweise pneumatisch angetrieben sein und auf der Rückseite der Fixiervorrichtung mit dieser integral verbunden oder an diese angeschlossen sein. Im allgemeinen ist es möglich, durch die Kopplung von Zugkraft und Schubkraft die Länge der lösbaren Rohrsegmente deutlich zu erhöhen.

Zur Stabilisierung der Vorrichtung in der auszutreibenden Rohrleitung kann es ferner zweckmäßig sein, diese, insbesondere im Bereich der Bodenrakete, mit Federelementen gegen die innere Wandung der Rohrleitung abzustützen, um eine Zentrierung zu erreichen.

Die Erfindung betrifft ferner eine Vorrichtung zur Durchführung des vorstehend beschriebenen Verfahrens, bei dem ein konisch zulaufender Spreizkörper mit wenigstens einem um den Konus des Spreizkörpers angeordneten Fixierelement versehen ist, und wenigstens zwei zwischen einer eingefahrenen und ausgefahrenen Position bewegliche Mitnehmer aufweist, wobei der Spreizkörper frontseitig mit einem Zugseil und rückwärtig mit einem Steuerseil verbunden ist. Bevorzugt ist eine Vorrichtung mit vier um den Spreizkörper angeordneten Fixierelementen mit je einem Mitnehmer.

Die Mitnehmer der erfindungsgemäßen Vorrichtung können auf mehrere Arten und Weisen zwischen der eingefahrenen und ausgefahrenen Position bewegt werden. Eine Möglichkeit ist die Anordnung von Federelementen, die die Mitnehmer gegen einen als Widerlager dienenden Rücksprung des jeweiligen Fixierelements aus einer Eintiefung heraus aufrichten. Diese Anordnung hat den Vorteil, daß die Mitnehmer in Richtung des Zugseils sperren, sich dagegen in Richtung des Steuerseils niederlegen, wenn sich der Rohrdurchmesser verengt und sie aus dem Muffenbereich eines Rohres herausgezogen werden. Die Mitnehmer können auch hydraulisch ausfahrbar ausgelegt sein, wozu eine hydraulische Hilfsleitung vorhanden sein kann oder aber eine Steuerung der Hydraulik über das Zug- und Steuerseil möglich ist.

Die mehrteilige Ausbildung der erfindungsgemäßen Fixiervorrichtung mit einem konisch zulaufenden Spreizkörper und einer Mehrzahl um den Konus des Spreizkörpers angeordneten Fixierelementen hat den Vorteil, daß die Fixierelemente durch den Konus auseinandergetrieben werden und somit eine Spreizwirkung in Richtung auf die Rohrwandung entfalten. Diese Spreizwirkung führt zu einem Reibschluß, über den ein Teil der über das Zugseil übertragenen Kraft auf die Rohrwandung übertragen werden kann. Zur Verbesserung dieses Reibschlusses kann es zweckmäßig sein, für den Spreizkörper im Konusbereich eine geringere Steigung vorzusehen, als bei den umgebenen Fixierelementen, so daß der Konus des Spreizkörpers die Fixierelemente mit steigender Zugkraft zunehmend verspreizt und gegen die Rohrwandung preßt. Bei dieser Variante ist es ohne weiteres möglich, durch eine oder mehrere zusätzliche Distanzscheiben zwischen Spreizkörper und Fixierelementen eine Anpassung des Spreizkörpers an die innere Rohrweite zu erreichen. Die Distanzscheiben befinden sich dabei an der Spitze des Konus und sind um das Zugseil herum angeordnet. Sie wirken mit einem Vorsprung auf der Innenseite der Fixierelemente zusammen, der bei angezogenem Zugseil auf den Distanzscheiben aufliegt.

Bei dieser Variante können die Fixierelemente feststehende Mitnehmer in Form von Stiften oder Scheiben aufweisen, die sich in einen Muffenspalt einpressen. Sobald die Zugkraft unterbrochen wird und das Steuerseil betätigt wird, läßt der Spreizdruck des Spreizkörpers nach und ziehen sich die Fixierelemente von der Rohrwand zurück, vorzugsweise unterstützt von entsprechend angeordneten Federelementen oder dergleichen. Dazu sind zweckmäßigerweise Spreizkörper und Fixierelemente gegeneinander beweglich miteinander verbunden, so daß eine Aufspreizung der Fixierelemente und Anpassung an den inneren Durchmesser der Rohrleitung stattfinden kann.

Die erfindungsgemäße Fixiervorrichtung kann rückwärtig mit einer pneumatisch oder elektrisch angetriebenen Bodenrakete verbunden sein, die die Zugwirkung der Seilwinde im ersten oder Zielschacht unterstützt. Die Bodenrakete wird, wie auch das Steuerseil, vom zweiten oder Ausgangsschacht her betätigt und betrieben. Gemäß einer weiteren Variante ist es auch ohne weiteres möglich, den Spreizkörper der Fixiervorrichtung als Bodenrakete auszubilden.

Es ist ferner zweckmäßig, den Spreizkörper, insbesondere dann, wenn er als Bodenrakete ausgebildet ist, gegen die innere Wandung der Rohrleitung elastisch abzustützen und zu zentrieren. Hierzu können Federelemente vorgesehen sein, beispielsweise in Form vorgespannter Federstahlbänder, die gegen die Wandung wirken und bei der Bewegung der Vorrichtung an der Wandung entlang schleifen. Es ist zweckmäßig, jeweils drei oder vier dieser Federelemente über den Umfang der Vorrichtung/Rakete zu verteilen und in Längsrichtung ein oder zwei Federelementanordnungen vorzusehen.

Um schnelleres und präziseres Arbeiten zu ermöglichen, kann es zweckmäßig sein, die erfindungsgemäße Fixiervorrichtung mit einer Lichtquelle und einer Kamera zu versehen, um eine Orientierung und bessere Positionierung in der zu lösenden Rohrleitung zu ermöglichen.

Die Erfindung wird durch die beiliegenden Zeichnungen näher erläutert. Von diesen zeigt
- Fig. 1: eine erfindungsgemäße Fixiervorrichtung mit über Federn aufrichtbaren Mitnehmern,
- Fig. 2: eine Variante mit hydraulisch betriebenen Mitnehmern,
- Fig. 3: eine weitere Variante mit einer an den Rohrdurchmesser anpaßbaren Fixiervorrichtung,
- Fig. 4: eine Variante, in der die Fixiervorrichtung mit einer Bodenrakete gekoppelt ist, und
- Fig. 5: eine Variante, in der der als Bodenrakete ausgebildete Spreizkörper seitliche Federelemente aufweist.

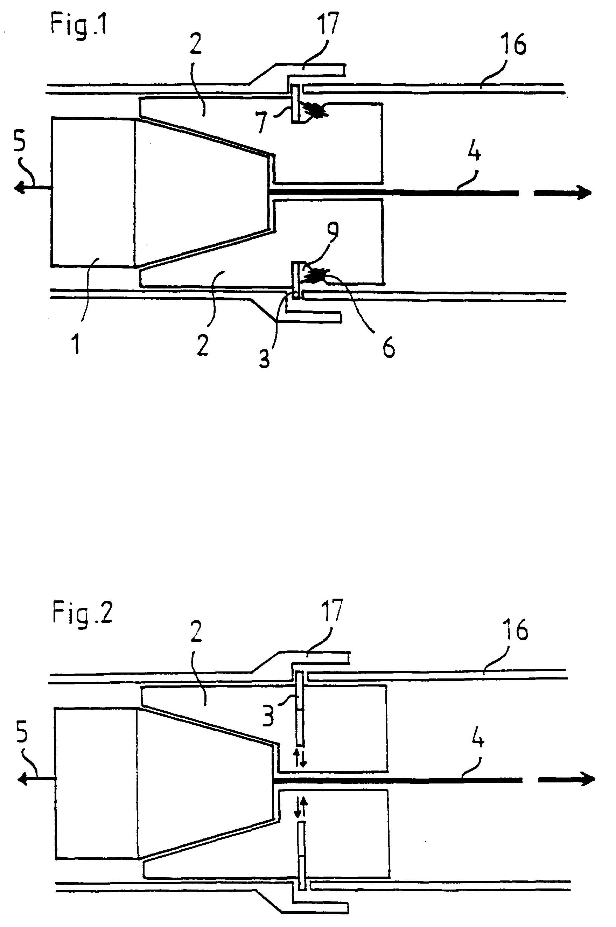

Die Fixiervorrichtung gemäß Fig. 1 besteht aus einem Spreizkörper 1, der in seinem vorderen Bereich 11 konusförmig ausgebildet ist und mit einem Zugseil 4 verbunden ist. Rückwärtig ist ein Steuerseil 5 verankert. Gemäß einer besonderen Variante kann der Spreizkörper 1 als Bodenrakete ausgebildet sein.

Der Spreizkörper 1 wirkt mit konzentrisch um den Konus 11 angeordneten Fixierelementen 2 zusammen, insgesamt vier an der Zahl. Der Konus 11 und die Fixierelemente 2 sind über nicht dargestellte Verbindungselemente beweglich miteinander verbunden. Die Steigungen des Konus und der komplementären Fixierelemente entsprechen einander. Im Zentrum, konzentrisch um das Zugseil 4, verbleibt zwischen den Fixierelementen 2 ein Kanal, durch den das Zugseil verläuft. An der Außenseite der Fixierelemente 2 befinden sich Eintiefungen 9, in denen Mitnehmer 3 ausklappbar gelagert sind. Die Federelemente 6 sorgen für ein automatisches Aufrichten der Mitnehmer 3 gegen den als Widerlager dienenden Rücksprung 7 des Fixierelements im Bereich der Eintiefung 9.

Bei Bewegung der Fixiervorrichtung in Richtung des Zugseils 4 verriegeln die Mitnehmer 3 im Bereich des Muffenspalts und lösen das Rohr 16 des zu lösenden Rohrsegments aus der Muffe 17. Bei Zurückziehen der Fixiervorrichtung aus der Arbeitsposition in die Transportposition über das Steuerseil 5, klappen die Mitnehmer 3 automatisch ein.

Fig. 2 zeigt eine Variante der Ausführungsform gemäß Fig. 1, bei der die Mitnehmer nicht über Federn, sondern über ein hydraulisches Element 10 ein- und ausfahrbar sind. Im übrigen bezeichnen in allen Abbildungen gleiche Ziffern gleiche Sachverhalte. Die Hydraulik kann über eine separate hydraulische Steuerleitung betätigt werden, aber auch über Schaltelemente, die mit dem Zug- und Steuerseil in Verbindung stehen und darüber ausgelöst werden.

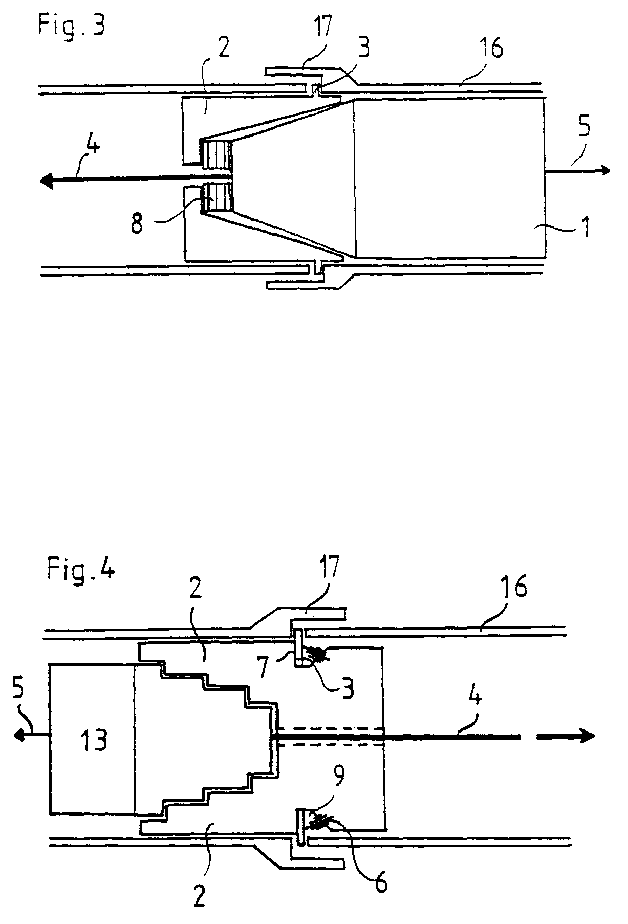

Fig. 3 zeigt eine weitere Variante der erfindungsgemäßen Vorrichtung, bei der die Fixierelemente 2 und der Konus 11 des Spreizkörpers 1 unterschiedliche Steigung aufweisen. Die Steigung des Konus ist geringer ausgebildet, so daß bei zunehmendem Eindringen des Konus in die entsprechende Öffnung der Fixierelemente 2 eine verstärkte Aufspreizung stattfindet. Die Fixierelemente legen sich dadurch fest an die Wandung der Rohrleitung an und bewirken einen Reibschluß. Über eingelegte Distanzscheiben an der Frontseite des Spreizkörpers 1 im Bereich der Aufnahme der Fixierelemente kann eine Grobanpassung der Fixierelemente an die lichte Weite der jeweiligen Rohrleitung vorgenommen werden. Verfahren und Vorrichtung können auf gemuffte Rohrleitungen aller üblichen Durchmesser angewandt werden. Das Zugseil 4 verläuft mittig durch die Fixierelemente und durch eine zentrale Bohrung der Distanzscheiben 8. Zur Verbesserung der Kraftübertragung weisen die Fixierelemente im Außenbereich immer drei in Form von feststehenden Nasen auf, die in die Muffenspalte eingreifen. Diese Nasen werden bei Zurückziehen des Spreizkörpers über das Steuerseil 5 und eine nicht dargestellte rückstellende Verbindung der Fixierelemente untereinander und mit dem Spreizkörper automatisch aus dem Muffenspalt zurückgezogen, so daß sich die Fixiervorrichtung löst.

Gemäß Fig. 3 kann der Spreizkörper 1 auch direkt von einer im Frontbereich konisch zulaufenden Bodenrakete gebildet werden. In diesem Fall kann das Steuerseil 5 zugleich als elektrische oder pneumatische Zuleitung zum Betrieb der Bodenrakete ausgebildet sein.

Fig. 4 zeigt eine Variante der erfindungsgemäßen Fixiervorrichtung, bei der ein einzelnes Fixierelement mit vier um die Peripherie verteilten Mitnehmern 3 mit einer in die Struktur eingepaßten Bodenrakete 13 verbunden ist. Die stufenförmige Ausgestaltung der Aufnahme für die Bodenrakete im Fixierelement gewährleistet eine einwandfreie Zusammenwirkung und eine optimale Übertragung der von der Bodenrakete ausgeübten Kraft. Bei pneumatischem Antrieb erfolgt die Druckluftzufuhr über das Steuerkabel 5, das als Druckluftschlauch ausgebildet ist.

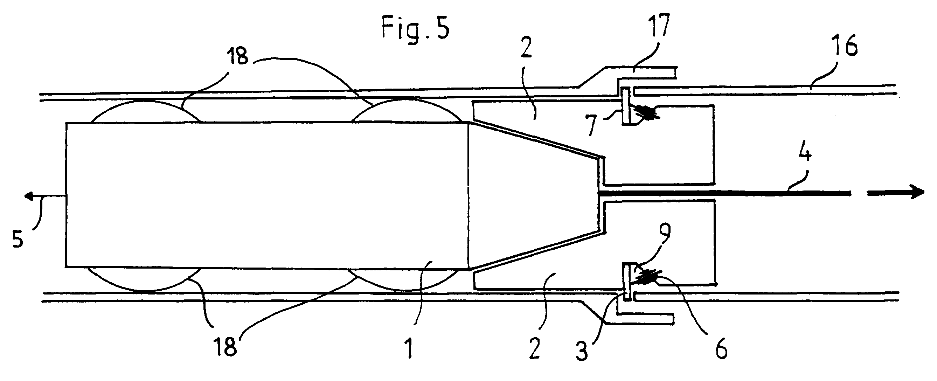

Fig. 5 zeigt eine weitere Variante der erfindungsgemäßen Vorrichtung, gemäß der die als Bodenrakete ausgebildete Spreizvorrichtung 1 Federelemente 18 aufweist, die den Körper gegen die Innenwandung der Rohrleitung 16 elastisch abstützen und in der Leitung zentrieren. Es sind vier Federelemente in einer Höhe regelmäßig über den Umfang verteilt; dargestellt sind zwei einander gegenüberliegende. Die Rakete 1 verfügt über insgesamt zwei im Abstand zueinander angeordnete Kränze aus Federelementen 18.

Zur Zentrierung der Vorrichtung sind im allgemeinen drei oder vier über den Umfang verteilte Federelemente 18 ausreichend. Zweckmäßigerweise handelt es sich dabei um vorgespannte Federstahlbänder, die das problemlose Entlanggleiten der Vorrichtung an der Wandung gewährleisten.

## Patentansprüche

1. Verfahren zum segmentierten Lösen von im Boden verlegten gemufften Rohrleitungen (16), bei dem die Rohrleitung (16) ausgehend von zwei räumlich voneinander getrennten Baugruben geöffnet wird, in die geöffnete Rohrleitung (16) eine Fixiervorrichtung (2) eingebracht wird, die über ein erstes Zugseil (4) mit einer Hauptwinde in der ersten Baugrube verbunden wird und über ein zweites Steuerseil (5) mit einer Hilfswinde in der zweiten Baugrube, die Fixiervorrichtung (2) im Bereich einer Muffenverbindung (17) fixiert wird und die Rohrleitung Segment für Segment durch Betätigung der Hauptwinde gelöst wird, wobei die Fixiervorrichtung (2) durch Betätigung der Hilfswinde von Muffenverbindung (17) zu Muffenverbindung (17) bewegt wird.

2. Verfahren nach Anspruch 1, dadurch gekennzeichnet, daß die Fixiervorrichtung (2) über Mitnehmer (3) im Muffenspalt (17) zwischen zwei Rohrsegmenten fixiert wird.

3. Verfahren nach Anspruch 1 oder 2, dadurch gekennzeichnet, daß die Fixiervorrichtung (3) über das Zugseil (4) aktiviert wird und über das Steuerseil (5) gelöst wird.

4. Verfahren nach Anspruch 2 oder 3, dadurch gekennzeichnet, daß die Fixiervorrichtung (2) über mit Federkraft betätigte Mitnehmer (3) im Muffenspalt (17) fixiert wird.

5. Verfahren nach Anspruch 2 oder 3, dadurch gekennzeichnet, daß die Fixiervorrichtung (2) über hydraulisch betätigte Mitnehmer (3) im Muffenspalt (17) fixiert wird.

6. Verfahren nach einem oder mehreren der vorstehenden Ansprüche, dadurch gekennzeichnet, daß die Fixiervorrichtung (2) durch Betätigung des Zugseils (4) gegen die Rohrwandung verspreizt wird.

7. Verfahren nach einem oder mehreren der vorstehenden Ansprüche, dadurch gekennzeichnet, daß die Fixiervorrichtung (2) zur Verstärkung der Zugkraft des Zugseils (4) mit einer Bodenrakete (1) gekoppelt wird.

8. Verfahren nach Anspruch 7, dadurch gekennzeichnet, daß die Bodenrakete (1) pneumatisch angetrieben wird.

9. Verfahren nach einem der Ansprüche 7 oder 8, dadurch gekennzeichnet, daß die Bodenrakete (1) seitlich mit Federelementen (18) gegen die innere Wandung der Rohrleitung (16) abgestützt wird.

10. Vorrichtung zur Durchführung des Verfahrens nach Anspruch 1, gekennzeichnet durch einen konisch zulaufenden Spreizkörper (1) mit wenigstens einem um den Konus des Spreizkörpers (1) angeordneten Fixierelement (2), und wenigstens zwei zwischen einer eingefahrenen und einer ausgefahrenen Position beweglichen Mitnehmern (3), wobei der Spreizkörper (1) frontseitig mit einem Zugseil (4) und rückwärtig mit einem Steuerseil (5) verbunden ist.

11. Vorrichtung nach Anspruch 10, dadurch gekennzeichnet, daß die Mitnehmer (3) Federelemente (6) aufweisen, die die Mitnehmer (3) gegen einen als Widerlager dienenden Rücksprung (7) des wenigstens einen Fixierelements (2) aufrichten.

12. Vorrichtung nach Anspruch 10, dadurch gekennzeichnet, daß die Mitnehmer (3) in dem wenigstens einen Fixierelement (2) versenkt angeordnet und hydraulisch ausfahrbar ausgelegt sind.

13. Vorrichtung nach einem der Ansprüche 10 bis 12, dadurch gekennzeichnet, daß der Spreizkörper (1) von vier Fixierelementen (2) mit je einem Mitnehmer (3) umgeben ist.

14. Vorrichtung nach Anspruch 13, dadurch gekennzeichnet, daß der Spreizkörper (1) im Konusbereich (11) eine geringere Steigung aufweist als die umgebenden Fixierelemente (2), um eine Aufspreizung und Anpassung an den inneren Durchmesser der Rohrleitung zu erreichen.

15. Vorrichtung nach Anspruch 14, dadurch gekennzeichnet, daß zwischen Spreizkörper (1) und Fixierelementen (2) eine oder mehrere Distanzscheiben (8) angeordnet sind, um eine Anpassung des äußeren Durchmessers der Vorrichtung an die Durchmesser der Rohrleitung zu erreichen.

16. Vorrichtung nach einem der Ansprüche 14 oder 15, dadurch gekennzeichnet, daß die Fixierelemente (2) Mitnehmer (3) in Form feststehender Stifte aufweisen.

17. Vorrichtung nach einem der Ansprüche 10 bis 16, dadurch gekennzeichnet, daß der Spreizkörper (1) rückwärtig mit einer Bodenrakete (13) verbunden ist.

18. Vorrichtung nach einem der Ansprüche 10 bis 16, dadurch gekennzeichnet, daß der Spreizkörper (1) als Bodenrakete ausgebildet ist.

19. Vorrichtung nach einem der Ansprüche 17 oder 18, dadurch gekennzeichnet, daß die Bodenrakete (1) pneumatisch angetrieben ist.

20. Vorrichtung nach einem der Ansprüche 13 bis 19, dadurch gekennzeichnet, daß der Spreizkörper (1) und die Fixierelemente (2) gegeneinander beweglich miteinander verbunden sind, so daß eine Aufspreizung der Fixierelemente (2) und Anpassung an den inneren Durchmesser der Rohrleitung stattfindet.

21. Vorrichtung nach einem der Ansprüche 10 bis 20, dadurch gekennzeichnet, daß der Spreizkörper (1) seitlich mit Federelementen (18) versehen ist, die der Zentrierung der Vorrichtung in Bezug auf die Rohrleitung (16) dienen.

22. Vorrichtung nach einem der Ansprüche 10 bis 21, dadurch gekennzeichnet, daß sie mit einer Lichtquelle und einer Kamera versehen ist.
